(19) **Europäisches Patentamt / European Patent Office / Office européen des brevets**

(11) **EP 3 115 201 A1**

(12) **EUROPEAN PATENT APPLICATION**
published in accordance with Art. 153(4) EPC

(43) Date of publication:
**11.01.2017 Bulletin 2017/02**

(21) Application number: **15758670.2**

(22) Date of filing: **23.02.2015**

(51) Int Cl.:
**B32B 27/22** (2006.01)  **B29C 61/06** (2006.01)
**B32B 7/02** (2006.01)  **B32B 27/30** (2006.01)
**B32B 27/36** (2006.01)  **G09F 3/04** (2006.01)
**B29K 67/00** (2006.01)  **B29K 105/02** (2006.01)
**B29L 9/00** (2006.01)

(86) International application number:
**PCT/JP2015/055032**

(87) International publication number:
**WO 2015/133314 (11.09.2015 Gazette 2015/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **03.03.2014 JP 2014040852**

(71) Applicant: **Gunze Limited**
**Ayabe-shi, Kyoto 623-8511 (JP)**

(72) Inventors:
• **ISHIKAWA Kiyoyasu**
**Moriyama-shi**
**Shiga 524-8501 (JP)**

• **OHAMA Yuki**
**Moriyama-shi**
**Shiga 524-8501 (JP)**
• **OHNO Naoki**
**Moriyama-shi**
**Shiga 524-8501 (JP)**

(74) Representative: **Adam, Holger**
**Kraus & Weisert**
**Patentanwälte PartGmbB**
**Thomas-Wimmer-Ring 15**
**80539 München (DE)**

(54) **HEAT-SHRINKABLE MULTILAYER FILM AND HEAT-SHRINKABLE LABEL**

(57) The present invention provides a heat shrinkable multilayer film which has excellent printability and also has good finish quality after attachment. The present invention relates to a heat shrinkable multilayer film, including front and back layers each containing a polyester resin, an interlayer, and adhesive layers, the front and back layers and the interlayer being stacked with the adhesive layers interposed therebetween. The interlayer contains a styrene homopolymer and a plasticizer. The interlayer contains the plasticizer in an amount of 5 to 35% by weight.

**EP 3 115 201 A1**

**Description**

TECHNICAL FIELD

The present invention relates to a heat shrinkable multilayer film which has excellent printability and also has good finish quality after attachment. The present invention also relates to a heat shrinkable label including the heat shrinkable multilayer film.

BACKGROUND ART

Heat shrinkable labels, which are prepared by printing images on a base film made of heat shrinkable resin, are attached to various containers such as plastic bottles and metal cans these days.

For such heat shrinkable labels, polystyrene resin films are often used because of their excellent low-temperature shrinkability. However, polystyrene resin films are insufficient in heat resistance and solvent resistance. To solve this problem, polyester resin films with excellent heat resistance and solvent resistance have also been used. However, polyester resin films have poor low-temperature shrinkability and rapidly shrink, so that they easily crease when attached to containers.

To solve such problems, for example, there have been studied multilayer films including polyester resin-containing front and back layers and a polystyrene resin-containing interlayer. Patent Literature 1, for example, discloses a heat shrinkable multilayer film excellent in low-temperature shrinkability, rigidity, and shrink finish quality.

However, such heat shrinkable multilayer films suffer from formation of gel or like impurities during shape forming, because the polystyrene resin in the interlayer mainly contains a block copolymer of a styrene hydrocarbon and a conjugated diene hydrocarbon, such as a styrene-butadiene block copolymer or a styrene-isoprene-butadiene block copolymer. As a result, during printing on base films made of such heat shrinkable films, fish-eye-shaped protrusions and depressions due to the gel or like impurities cause uneven printing. In addition, when the base films made of such heat shrinkable films are attached to bottles or like containers, defects such as creases, sliding-up, or waviness (undulations of the upper or lower end of the label) occur upon attaching.

CITATION LIST

- Patent Literature

Patent Literature 1: JP 2006-15745 A

SUMMARY OF INVENTION

- Technical Problem

An object of the present invention is to provide a heat shrinkable multilayer film which has excellent printability and also have good finish quality after attachment. Another object of the present invention is to provide a heat shrinkable label including the heat shrinkable multilayer film.

- Solution to Problem

The present invention provides a heat shrinkable multilayer film including front and back layers each containing a polyester resin, an interlayer, and adhesive layers, the front and back layers and the interlayer being stacked with the adhesive layers interposed therebetween, the interlayer containing a styrene homopolymer and a plasticizer, the interlayer containing the plasticizer in an amount of 5 to 35% by weight.

In the following, the present invention will be described in detail.

The present inventors found out that in a heat shrinkable multilayer film in which front and back layers containing a polyester resin and an interlayer are stacked with adhesive layers interposed therebetween, use of a styrene homopolymer and a plasticizer as components of the interlayer enables the film to have excellent printability and also good finish quality after attachment.

The heat shrinkable multilayer film of the present invention contains front and back layers and an interlayer.

The "front and back layers" as used herein means both a front layer and a back layer. The "interlayer" as used herein means a layer between a front layer and a back layer. The interlayer does not necessarily consist only of one layer, and may include two or more layers as long as the interlayer contains predetermined amounts of a styrene homopolymer and a plasticizer.

The front and back layers each contain a polyester resin.

Examples of the polyester resin include those obtainable by condensation polymerization of dicarboxylic acid components and diol components. Particularly preferred are aromatic polyester resins containing 55 mol% or more of terephthalic acid as a dicarboxylic acid component in 100 mol% of the dicarboxylic acid components. The aromatic polyester resins may contain, in addition to terephthalic acid, any of o-phthalic acid, isophthalic acid, succinic acid, adipic acid, sebacic acid, azelaic acid, octylsuccinic acid, cyclohexane dicarboxylic acid, naphthalene dicarboxylic acid, fumaric acid, maleic acid, itaconic acid, decamethylene carboxylic acid, anhydrides thereof, and lower alkyl esters thereof, as the dicarboxylic acid component.

Any diol component may be used. Examples thereof include aliphatic diols such as ethylene glycol, 1,3-propanediol, 1,4-butanediol, diethylene glycol, 1,5-pentanediol, 1,6-hexanediol, dipropylene glycol, triethylene glycol, tetraethylene glycol, 1,2-propanediol, 1,3-butanediol, 2,3-butanediol, neopentyl glycol(2,2-dimethylpropane-1,3-diol), 1,2-hexanediol, 2,5-hexanediol, 2-methyl-2,4-pentanediol, 3-methyl-1,3-pentanediol, 2-ethyl-1,3-hexanediol, and polytetramethylene ether glycol; and alicyclic diols such as 2,2-bis(4-hydroxycyclohexyl)propane, alkylene oxide adducts of 2,2-bis(4-hydroxycyclohexyl)propane, 1,4-cyclohexanediol, and 1,4-cyclohexane dimethanol.

Preferred among the polyester resins are those containing a component derived from terephthalic acid as a dicarboxylic acid component, and a component derived from ethylene glycol and/or 1,4-cyclohexane dimethanol as a diol component. By using such an aromatic polyester random copolymer resin, excellent shrinkability can be provided to the heat shrinkable multilayer film.

For even higher shrinkability, the amount of the component derived from ethylene glycol is preferably 60 to 80 mol% and the amount of the component derived from 1,4-cyclohexane dimethanol is preferably 10 to 40 mol% in 100 mol% of the diol components.

Such an aromatic polyester random copolymer resin may optionally further contain a component derived from diethylene glycol in an amount of 0 to 30 mol%, preferably 1 to 25 mol%, and more preferably 2 to 20 mol%. Use of diethylene glycol leads to increased tensile elongation at break in the main shrinkage direction of the heat shrinkable multilayer film, which prevents the front and back layers on the inner side of the film from remaining on a container due to delamination when the film is torn along perforations. If the amount of the component derived from diethylene glycol is more than 30 mol%, the heat shrinkable multilayer film has excessively increased low-temperature shrinkability and easily creases when attached to a container.

The polyester resin containing a component derived from terephthalic acid as a dicarboxylic acid component may contain a component derived from 1,4-butanediol as a diol component. Such a polyester resin is generally referred to as polybutylene terephthalate resin.

The polybutylene terephthalate resin is preferably used in combination with the aromatic polyester random copolymer resin containing a component derived from terephthalic acid as a dicarboxylic acid component and a component derived from ethylene glycol and 1,4-cyclohexane dimethanol as a diol component. Use of such a mixed resin provides excellent finish quality.

The polybutylene terephthalate resin may be a polybutylene terephthalate resin consisting only of a component derived from terephthalic acid and a component derived from 1,4-butanediol, or may be a polybutylene terephthalate resin containing a dicarboxylic acid component other than a component derived from terephthalic acid and/or a diol component other than a component derived from 1,4-butanediol.

The amount of the dicarboxylic acid component other than a component derived from terephthalic acid is preferably 10 mol% or less in 100 mol% of the dicarboxylic acid components. If the amount is more than 10 mol%, the polybutylene terephthalate resin has low heat resistance, possibly causing economic disadvantages. The amount of the diol component other than a component derived from 1,4-butanediol is preferably 10 mol% or less in 100 mol% of the diol components. If the amount is more than 10 mol%, the polybutylene terephthalate resin has low heat resistance, possibly causing economic disadvantages.

The amount of the polybutylene terephthalate resin to be added is not limited, and is preferably 30% by weight or less. If the amount is more than 30% by weight, the spontaneous shrinkage may be great, or the film may have low rigidity.

The lower limit of the glass transition temperature of the polyester resin constituting the front and back layers is preferably 55°C, and the upper limit thereof is preferably 95°C. If the glass transition temperature is lower than 55°C, the shrinkage starting temperature of the heat shrinkable multilayer film may be too low, or the spontaneous shrinkage may be great. If the glass transition temperature is higher than 95°C, the heat shrinkable multilayer film may have reduced low-temperature shrinkability and reduced shrink finish quality, or may show a great decrease in the low-temperature shrinkability with time. The lower limit of the glass transition temperature is more preferably 60°C, and the upper limit thereof is more preferably 90°C.

The glass transition temperature can be measured by a differential scanning calorimeter (DSC).

The tensile modulus of elasticity of the polyester resin constituting the front and back layers is preferably more than 1000 MPa, and the upper limit thereof is preferably 4000 MPa. If the tensile modulus of elasticity is 1000 MPa or less, the shrinkage starting temperature of the heat shrinkable film may be too low, or the spontaneous shrinkage thereof may be great. If the tensile modulus of elasticity is more than 4000 MPa, the heat shrinkable multilayer film may have reduced low-temperature shrinkability and reduced shrink finish quality, or may show a great decrease in the low-temperature shrinkability with time. The lower limit of the tensile modulus of elasticity is more preferably 1500 MPa, and the upper limit thereof is more preferably 3700 MPa.

The tensile modulus of elasticity can be measured in accordance with ASTM-D882 (Test A).

Examples of commercially available polyester resins for constituting the front and back layers include "Easter", "Embrace LV" (both produced by Eastman Chemical Company), "BELLPET" (produced by Bell Polyester Products, Inc.), and "NOVADURAN" (produced by Mitsubishi Engineering-Plastics Corporation).

The front and back layers may contain one polyester resin having the above-described composition alone, or may contain two or more polyester resins having the above composition. The front and the back layers may contain different polyester resins with different compositions, but preferably contain the same polyester resin to prevent troubles due to curling up of the film.

The front and back layers may optionally contain additives such as an antioxidant, a heat stabilizer, an ultraviolet absorber, a light stabilizer, a lubricant, an antistatic agent, an anti-blocking agent, a flame retardant, an antimicrobial, a fluorescent whitening agent, and a colorant.

The interlayer contains a styrene homopolymer.

The inclusion of a styrene homopolymer in the interlayer enables the heat shrinkable multilayer film to have excellent printability.

The "styrene homopolymer" as used herein refers to a polymer consisting only of styrene monomers.

The styrene homopolymer preferably has a number average molecular weight of 50000 to 250000.

The "number average molecular weight" as used herein means the value determined by gel permeation chromatography (CPC).

The styrene homopolymer preferably has a melt flow rate (MFR) at 200°C of 1.0 to 20.0 g/10 min. The MFR can be measured in accordance with ISO1133.

The styrene homopolymer preferably has a Vicat softening temperature of 90°C to 110°C. The Vicat softening temperature can be measured in accordance with JIS K 7206 (1999).

If the number average molecular weight, the MFR, and the Vicat softening temperature of the styrene homopolymer are within the above respective ranges, the heat shrinkable multilayer film to be obtained can have less variation in thickness, uniform shrinkage properties, and excellent mechanical strength.

The lower limit of the amount of the styrene homopolymer in the interlayer is preferably 10% by weight, and the upper limit thereof is preferably 90% by weight. If the amount of the styrene homopolymer is less than 10% by weight, the heat shrinkable multilayer film may have low rigidity, which may cause attachment failure when the heat shrinkable label is attached. If the amount is more than 90% by weight, the heat shrinkage may be reduced, which may cause attachment failure. The lower limit of the amount of the styrene homopolymer is more preferably 30% by weight, and the upper limit thereof is more preferably 85% by weight.

Commercially available styrene homopolymers include PSJ-Polystyrene "HF77" (produced by PS Japan Corporation), Toyo Styrol GP "G200C" (produced by Toyo Styrene Co., Ltd), and Die Styrene "CR-3500" (produced by DIC Corporation).

The interlayer contains a plasticizer.

The inclusion of a plasticizer in the interlayer enables the heat shrinkage of the resulting heat shrinkable multilayer film to be within an appropriate range. In the present invention, it is preferred that only the interlayer contains the plasticizer. This prevents bleeding of the plasticizer and also leads to more suitable heat shrinkage of the heat shrinkable multilayer film.

The plasticizer is preferably an ester compound or an epoxidized vegetable oil.

Examples of the ester compound include aromatic carboxylates, aliphatic carboxylates, glycol esters, phosphates, trimellitates, and citrates. Among these ester compounds, aromatic carboxylates and aliphatic carboxylates are preferred, and ester compounds of dicarboxylic acids are also preferred.

Examples of the aromatic carboxylates include ester compounds of aromatic carboxylic acids and ester compounds of aromatic dicarboxylic acids such as phthalates.

Preferred among these aromatic carboxylates are phthalates.

Examples of the phthalates include dibutyl phthalate, dihexyl phthalate, diheptyl phthalate, di-n-octyl phthalate, dioctyl phthalate, diisooctyl phthalate, dinonyl phthalate, diisononyl phthalate, didecyl phthalate, diisodecyl phthalate, dilauryl phthalate, ditridecyl phthalate, dicyclohexyl phthalate, n-octyl n-decyl phthalate, isodecyl octyl phthalate, butyl isodecyl phthalate, butyl isohexyl phthalate, butyl octyl phthalate, butyl decyl phthalate, butyl benzyl phthalate, butyl lauryl phthalate, and diamyl phthalate.

Preferred among these phthalates are dioctyl phthalate, diisodecyl phthalate, dibutyl phthalate, and diisononyl phthalate.

Examples of the aliphatic carboxylates include adipates, succinate, sebacates, oleates, and azelates.

Preferred among these carboxylates are aliphatic dicarboxylates, with adipates being particularly preferred.

Examples of the adipates include diisobutyl adipate, diisopropyl adipate, diethyl adipate, dibutyl adipate, dimethyl adipate, dioctyl adipate, and diisononyl adipate.

Examples of the sebacates include dibutyl sebacate, dimethyl sebacate, and dioctyl sebacate.

Examples of the epoxidized vegetable oil include epoxidized soybean oil, epoxidized linseed oil, epoxidized rapeseed oil, epoxidized sunflower oil, epoxidized castor oil, epoxidized peanut oil, and epoxidized palm oil. These epoxidized vegetable oils may be used alone or in combination of two or more thereof. Preferred among these oils are epoxidized soybean oil and epoxidized linseed oil. Preferred epoxidized soybean oils include those containing epoxidized fatty acid glyceride.

The lower limit of the amount of the plasticizer in the interlayer is 5% by weight, and the upper limit thereof is 35% by weight.

If the amount of the plasticizer is less than 5% by weight, the heat shrinkage may be reduced, which may cause attachment failure. If the amount of the plasticizer is more than 35% by weight, spontaneous shrinkage tends to be great. In addition, it may be difficult to form the film by extrusion. The lower limit of the amount of the plasticizer is preferably 11% by weight, and the upper limit thereof is preferably 30% by weight.

The interlayer preferably further contains an aromatic vinyl hydrocarbon-conjugated diene copolymer. The inclusion of the aromatic vinyl hydrocarbon-conjugated diene copolymer in the interlayer leads to good shrinkability of the heat shrinkable multilayer film to be obtained.

The "aromatic vinyl hydrocarbon-conjugated diene copolymer" as used herein means a copolymer containing a component derived from an aromatic vinyl hydrocarbon and a component derived from a conjugated diene.

Any aromatic vinyl hydrocarbon may be used. Examples thereof include styrene, o-methylstyrene, and p-methylstyrene. These may be used alone or in combination of two or more thereof. Any conjugated diene may be used. Examples thereof include 1,3-butadiene, 2-methyl-1,3-butadiene, 2,3-dimethyl-1,3-butadiene, 1,3-pentadiene, and 1,3-hexadiene. These may be used alone or in combination of two or more thereof.

The aromatic vinyl hydrocarbon-conjugated diene copolymer preferably contains a styrene-butadiene copolymer (SBS resin) for particularly excellent heat shrinkability. For production of a heat shrinkable multilayer film with less fish eyes, the aromatic vinyl hydrocarbon-conjugated diene copolymer preferably contains an aromatic vinyl hydrocarbon-conjugated diene copolymer prepared using 2-methyl-1,3-butadiene (isoprene) as the conjugated diene, such as a styrene-isoprene copolymer (SIS resin) or a styrene-isoprene-butadiene copolymer (SIBS).

The aromatic vinyl hydrocarbon-conjugated diene copolymer may contain any one of SBS resin, SIS resin, and SIBS resin alone, or may contain more than one of them in combination. In the case of using more than one of SBS resin, SIS resin, and SIBS resin, the resins may be dryblended with each other, or the resins with a predetermined composition may be knead-pelletized through an extruder and the obtained compound resin may be used.

In the case that the aromatic vinyl hydrocarbon-conjugated diene copolymer contains one or more of SBS resin, SIS resin, and SIBS resin, the amount of the aromatic vinyl hydrocarbon is preferably 65 to 90% by weight, and the amount of the conjugated diene is preferably 10 to 35% by weight in 100% by weight of the aromatic vinyl hydrocarbon-conjugated diene copolymer, for a heat shrinkable multilayer film with particularly excellent heat shrinkability. Use of such an aromatic vinyl hydrocarbon-conjugated diene copolymer leads to better shrinkability of the heat shrinkable multilayer film to be obtained.

The lower limit of the Vicat softening temperature of the aromatic vinyl hydrocarbon-conjugated diene copolymer is preferably 60°C, and the upper limit thereof is preferably 85°C. If the Vicat softening temperature is lower than 60°C, the heat shrinkable multilayer film has excessively high low-temperature shrinkability and easily creases when attached to a container. If the Vicat softening temperature is higher than 85°C, the heat shrinkable multilayer film has reduced low-temperature shrinkability, and thus a non-shrinking portion is easily formed when the film is attached to a container. The lower limit of the Vicat softening temperature is more preferably 65°C, and the upper limit thereof is more preferably 80°C. The Vicat softening temperature can be measured in accordance with JIS K 7206 (1999).

The lower limit of the melt flow rate (MFR) at 200°C of the aromatic vinyl hydrocarbon-conjugated diene copolymer is preferably 2 g/10 min, and the upper limit thereof is preferably 15 g/10 min. If the MFR at 200°C is less than 2 g/10 min, the film is difficult to form. If the MFR at 200°C is more than 15 g/10 min, the film has low mechanical strength and will not endure practical use. The lower limit of the MFR at 200°C is more preferably 4 g/10 min, and the upper limit thereof is more preferably 12 g/10 min. The MFR can be measured in accordance with ISO1133.

The amount of the aromatic vinyl hydrocarbon-conjugated diene copolymer in the interlayer is preferably 60% by weight or less.

If the amount is more than 60% by weight, gel or like impurities are more likely to be produced in shape forming, which may cause printing failures. The lower limit of the amount thereof is more preferably 10% by weight, and the upper limit thereof is more preferably 50% by weight.

The lower limit of the proportion (% by weight) of a styrene component relative to all the resins constituting the interlayer is preferably 50% by weight, and the upper limit thereof is preferably 90% by weight. The lower limit is more preferably 71% by weight, and the upper limit is more preferably 81% by weight.

If the polystyrene resin constituting the interlayer is a mixed resin of a styrene homopolymer and a polystyrene resin other than the styrene homopolymer, the proportion (% by weight) of the styrene component is determined by calculating the product of the amount of the styrene homopolymer in the interlayer and 100; calculating the product of the amount of the polystyrene resin other than the styrene homopolymer and the amount of the styrene component in the polystyrene resin other than the styrene homopolymer; adding up the products; and dividing the resulting sum by 100. For example, in the case that the interlayer contains 34% by weight of a styrene homopolymer and 60% by weight of an aromatic vinyl hydrocarbon-conjugated diene copolymer (styrene: 70% by weight, conjugated diene: 30% by weight), the proportion of the styrene component relative to all the resins constituting the interlayer is 76% by weight.

The proportion (% by weight) of a conjugated diene component relative to all the resins constituting the interlayer is preferably 29% by weight or less.

The lower limit is more preferably 5% by weight, and the upper limit is more preferably 20% by weight.

In the case that the interlayer contains polystyrene resins containing a conjugated diene component, the proportion (% by weight) of the conjugated diene component is determined by calculating, for each polystyrene resin containing a conjugated diene component, the product of the amount of the polystyrene resin containing a conjugated diene component and the amount of the conjugated diene component in the polystyrene resin containing a conjugated diene component; adding up the resulting products; and dividing the resulting sum by 100. For example, in the case that the interlayer contains 50% by weight of an aromatic vinyl hydrocarbon-conjugated diene copolymer A (styrene: 70% by weight, conjugated diene: 30% by weight) and 50% by weight of an aromatic vinyl hydrocarbon-conjugated diene copolymer B (styrene: 60% by weight, conjugated diene: 40% by weight), the proportion of the conjugated diene component relative to all the resins constituting the interlayer is 35% by weight.

The interlayer may optionally contain additives such as an antioxidant, a thermal stabilizer, an ultraviolet absorber, a light stabilizer, a lubricant, an antistatic agent, an anti-blocking agent, a flame retardant, an antibacterial agent, a fluorescent brightener, and a colorant.

In the heat shrinkable multilayer film of the present invention, the front and back layers and the interlayer are stacked with adhesive layers interposed therebetween.

By using these adhesive layers, delamination between the front and back layers and the interlayer can be effectively prevented.

The resin used for the adhesive layers may be any resin that has adhesiveness to the front and back layers and the interlayer. The resin preferably contains at least one selected from the group consisting of a polyester elastomer, a styrene elastomer, and an aromatic vinyl hydrocarbon-conjugated diene copolymer.

The polyester elastomer is composed of a polyester as a hard segment and a polyether or a polyester as a soft segment that has rich rubber elasticity. Specific examples of the polyester elastomer include a block copolymer composed of an aromatic polyester as a hard segment and an aliphatic polyether as a soft segment, and a block copolymer composed of an aromatic polyester as a hard segment and an aliphatic polyester as a soft segment. The polyester elastomer is preferably a saturated polyester elastomer, and more preferably a saturated polyester elastomer containing a polyalkylene ether glycol segment as a soft segment.

Preferred examples of the saturated polyester elastomer containing a polyalkylene ether glycol segment include a block copolymer composed of an aromatic polyester as a hard segment and a polyalkylene ether glycol as a soft segment.

If the polyester elastomer is a block copolymer composed of an aromatic polyester and a polyalkylene ether glycol, the lower limit of the amount of the polyalkylene ether glycol segment is preferably 5% by weight, and the upper limit thereof is preferably 90% by weight. If the amount is less than 5% by weight, the adhesiveness to the interlayer is low. If the amount is more than 90% by weight, the adhesiveness to the front and back layers is low. The lower limit of the amount of the polyalkylene ether glycol segment is more preferably 30% by weight, and the upper limit thereof is more preferably 80% by weight. The lower limit is still more preferably 55% by weight.

Examples of the polyalkylene ether glycol include polyethylene glycol, poly(propylene ether) glycol, poly(tetramethylene ether) glycol, and poly(hexamethylene ether) glycol.

The lower limit of the number average molecular weight of the polyalkylene ether glycol is preferably 400, and the upper limit thereof is preferably 6000. The lower limit is more preferably 600, and the upper limit is more preferably 4000. The lower limit is still more preferably 1000, and the upper limit is still more preferably 3000. Use of a polyalkylene ether glycol with a number average molecular weight within the above range advantageously leads to good interlaminar strength.

The polyester elastomer may be produced by any method. For example, it may be produced by preparing an oligomer by esterification reaction or transesterification reaction using the following raw materials: (i) a C2-C12 aliphatic and/or alicyclic diol, (ii) an aromatic dicarboxylic acid and/or an alicyclic dicarboxylic acid, or an ester thereof, and (iii) a polyalkylene ether glycol with a number average molecular weight of 400 to 6000, and then performing condensation polymerization of the resulting oligomer.

Examples of the C2-C12 aliphatic and/or alicyclic diol include those typically used as a raw material of a polyester, especially as a raw material of a polyester thermoplastic elastomer. Specific examples thereof include ethylene glycol, propylene glycol, trimethylene glycol, 1,4-butanediol, 1,4-cyclohexanediol, and 1,4-cyclohexane dimethanol. Preferred among these diols are ethylene glycol and 1,4-butanediol, with 1,4-butanediol being more preferred. These may be used alone or in combination of two or more thereof.

Examples of the aromatic dicarboxylic acid and/or the alicyclic dicarboxylic acid include those typically used as a raw material of a polyester, especially as a raw material of a polyester thermoplastic elastomer. Specific examples thereof include terephthalic acid, isophthalic acid, phthalic acid, 2,6-naphthalene dicarboxylic acid, and cyclohexane dicarboxylic acid. Preferred among these dicarboxylic acids include terephthalic acid and 2,6-naphthalene dicarboxylic acid, with terephthalic acid being more preferred. These may be used alone or in combination of two or more thereof.

Examples of such polyester elastomers that are commercially available include those under the product names of "PRIMALLOY" (produced by Mitsubishi Chemical Corporation), "PELPRENE" (produced by Toyobo Co., Ltd.), and "Hytrel" (produced by Du Pont-Toray Co., Ltd.).

The polyester elastomer preferably has a melting point of 120°C to 200°C. If the melting point is lower than 120°C, the heat resistance may be low, which easily causes peeling of the film from a solvent sealed portion when the film is attached to a container as a heat shrinkable label. If the melting point is higher than 200°C, sufficient adhesive strength may not be achieved. The lower limit of the melting point is more preferably 130°C, and the upper limit thereof is more preferably 190°C.

The melting point can be measured using a differential scanning calorimeter (DSC-60, produced by Shimadzu Corporation) at a rate of temperature rise of 10°C/min.

The melting point of the polyester elastomer is affected by the copolymerization ratio between the polyester as a hard segment and the polyether or the polyester as a soft segment and the structure of these segments. The melting point of the polyester elastomer usually tends to depend on the copolymerization amount of the polyether or the polyester as a soft segment. A larger copolymerization amount of the polyether or the polyester leads to a lower melting point, whereas a smaller copolymerization amount thereof leads to a higher melting point.

The melting point of a polyester as a hard segment constituting the polyester elastomer may be adjusted by changing the copolymerization components of the polyester, whereby the melting point of the entire polyester elastomer may be adjusted.

A decrease in the molecular weight of the polyether or the polyester as a soft segment decreases the blocking properties of the polyester elastomer to be obtained, and thus tends to lead to a lower melting point.

The lower limit of a JIS-D hardness of the polyester elastomer is preferably 10, and the upper limit thereof is preferably 80. If the JIS-D hardness is 10 or more, the adhesive layers have improved mechanical strength. If the JIS-D hardness is 80 or less, the adhesive layers have improved flexibility and improved impact resistance. The lower limit of the JIS-D hardness of the polyester elastomer is more preferably 15, the upper limit thereof is more preferably 70. The lower limit is still more preferably 20, and the upper limit is still more preferably 60.

The JIS-D hardness can be determined in accordance with JIS K 6253 using a durometer (Type D).

The lower limit of the specific gravity of the polyester elastomer is preferably 0.95, and the upper limit thereof is preferably 1.20. If the specific gravity is 0.95 or more, heat resistance can be provided to the film, which prevents peeling of the film from a solvent sealed portion when the film is attached to a container as a heat shrinkable label. If the specific gravity is 1.20 or less, the adhesive strength between the front and back layers and the interlayer can be high.

The lower limit of the specific gravity is more preferably 0.98, and the upper limit thereof is more preferably 1.18.

The specific gravity can be determined in accordance with JIS K 7112 (1999) by a water displacement method.

The lower limit of the tensile modulus of elasticity of the polyester elastomer constituting the adhesive layers is preferably 1 MPa, and the upper limit thereof is preferably 1000 MPa. If the tensile modulus of elasticity is less than 1 MPa, the adhesive layers tend to have low mechanical strength. If the tensile modulus of elasticity is more than 1000 MPa, the adhesive strength between the front and back layers and the interlayer tends to be low. The lower limit of the tensile modulus of elasticity is more preferably 5 MPa, and the upper limit thereof is more preferably 900 MPa. The tensile modulus of elasticity can be measured in accordance with ASTM-882 (Test A).

The polyester elastomer may be a modified product. Examples of the modified product include a modified polyester elastomer obtained by grafting an $\alpha,\beta$-ethylenically unsaturated carboxylic acid to the polyester elastomer.

Examples of the $\alpha,\beta$-ethylenically unsaturated carboxylic acid include unsaturated carboxylic acids such as acrylic acid, maleic acid, fumaric acid, tetrahydrofumaric acid, itaconic acid, citraconic acid, crotonic acid, and isocrotonic acid; and unsaturated carboxylic anhydrides such as 2-octen-1-yl succinic anhydride, 2-dodecen-1-yl succinic anhydride, 2-octadecen-1-yl succinic anhydride, maleic anhydride, 2,3-dimethylmaleic anhydride, bromomaleic anhydride, dichloromaleic anhydride, citraconic anhydride, itaconic anhydride, 1-butene-3,4-dicarboxylic anhydride, 1-cyclopentene-1,2-dicarboxylic anhydride, 1,2,3,6-tetrahydrophthalic anhydride, 3,4,5,6-tetrahydrophthalic anhydride, exo-3,6-epoxy-1,2,3,6-tetrahydrophthalic anhydride, 5-norbornene-2,3-dicarboxylic anhydride, methyl-5-norbornene-2,3-dicarboxylic anhydride, endo-bicyclo[2.2.2]oct-5-ene-2,3-dicarboxylic anhydride, and bicyclo[2.2.2]oct-7-ene-2,3,5,6-tetracarboxylic anhydride. Preferred among these $\alpha,\beta$-ethylenically unsaturated carboxylic acids are acid anhydrides because they have high reactivity.

The styrene elastomer is not limited. Examples thereof include styrene elastomers composed of polystyrene as a hard segment and polybutadiene, polyisoprene, or a copolymer of polybutadiene and polyisoprene as a soft segment; and hydrogenated products thereof. In the hydrogenated products, polybutadiene, polyisoprene, and the like may be partially or entirely hydrogenated.

The modified product of the styrene elastomer is not limited. Examples thereof include those obtained by modification with a functional group such as a carboxylic acid group, an acid anhydride group, an amino group, an epoxy group, or a hydroxy group.

The amount of the functional group such as a carboxylic acid group, an acid anhydride group, an amino group, an epoxy group, and a hydroxy group in the modified product of the styrene elastomer is not limited. The lower limit thereof is preferably 0.05% by weight, and the upper limit thereof is preferably 5.0% by weight. If the amount of the functional group is less than 0.05% by weight, the adhesive layers to be obtained may have insufficient adhesiveness especially to the front and back layers. If the amount of the functional group is more than 5.0% by weight, the styrene elastomer may be degraded by heat when the functional group is added, and gel or like impurities are more likely to be produced. The lower limit of the amount of the functional group is more preferably 0.1% by weight, the upper limit thereof is more preferably 3.0% by weight.

Examples of such styrene elastomers or modified products thereof that are commercially available include Tuftec and Tufprene (both produced by Asahi Kasei Chemicals Corporation); Kraton (produced by Kraton Polymers); DYNARON, JSR TR, and JSR SIS (produced by JSR Corporation); and SEPTON (Kuraray Co., Ltd.).

The aromatic vinyl hydrocarbon-conjugated diene copolymer used for the adhesive layers may be the same as or different from that used for the interlayer. If a different aromatic vinyl hydrocarbon-conjugated diene copolymer is used, the copolymer is preferably softer than the polystyrene resin used for the interlayer.

The aromatic vinyl hydrocarbon-conjugated diene copolymer used for the adhesive layers preferably contains a styrene-butadiene copolymer (SBS resin), particularly preferably a styrene-butadiene block copolymer. For a heat shrinkable multilayer film with even better adhesiveness, the aromatic vinyl hydrocarbon-conjugated diene copolymer preferably contains an aromatic vinyl hydrocarbon-conjugated diene copolymer prepared using 2-methyl-1,3-butadiene (isoprene) as the conjugated diene, such as a styrene-isoprene copolymer (SIS resin) or a styrene-isoprene-butadiene copolymer (SIBS).

The aromatic vinyl hydrocarbon-conjugated diene copolymer may contain any one of SBS resin, SIS resin, and SIBS resin alone, or may contain more than one of them in combination. In the case of using more than one of SBS resin, SIS resin, and SIBS resin, the resins may be dryblended with each other, or the resins with a predetermined composition may be knead-pelletized through an extruder and the obtained compound resin may be used.

In the case that the aromatic vinyl hydrocarbon-conjugated diene copolymer contains one or more of SBS resin, SIS resin, and SIBS resin, the styrene content is preferably 50 to 90% by weight and the conjugated diene content is preferably 10 to 50% by weight in 100% by weight of the aromatic vinyl hydrocarbon-conjugated diene copolymer, for a heat shrinkable multilayer film with excellent adhesive strength between the layers. If the styrene content is less than 50% by weight or the conjugated diene content is more than 50% by weight, gel or like impurities are more likely to be produced during shape forming. If the styrene content is more than 90% by weight or the conjugated diene content is less than 10% by weight, the adhesive strength between the layers tends to be low.

The lower limit of the Vicat softening temperature of the aromatic vinyl hydrocarbon-conjugated diene copolymer used for the adhesive layers is preferably 55°C, and the upper limit thereof is preferably 85°C. If the Vicat softening temperature is lower than 55°C, the heat shrinkable multilayer film tends to suffer delamination between layers due to heating during attaching the film to a container. If the Vicat softening temperature is higher than 85°C, the heat shrinkable multilayer film tends to have low adhesive strength. The lower limit of the Vicat softening temperature is more preferably 60°C, still more preferably 65°C, particularly preferably 70°C. The upper limit thereof is more preferably 80°C. The Vicat softening temperature can be measured in accordance with JIS K7206 (1999).

The lower limit of a melt flow rate (MFR) at 200°C of the aromatic vinyl hydrocarbon-conjugated diene copolymer used for the adhesive layers is preferably 2 g/10 min, and the upper limit thereof is preferably 15 g/10 min. If the MFR at 200°C is lower than 2 g/10 min, the resin remains in an extruder in a continuous production process, easily causing gel or like impurities. If the MFR at 200°C is higher than 15 g/10 min, sufficient pressure is not applied during a film forming process, which tends to cause large variation in the thickness. The lower limit of the MFR at 200°C is more preferably 4 g/10 min, and the upper limit thereof is more preferably 12 g/10 min. The MFR can be determined in accordance with ISO 1133.

The adhesive layers may optionally contain additives such as an antioxidant, a heat stabilizer, an ultraviolet absorber, a light stabilizer, a lubricant, an antistatic agent, an anti-blocking agent, a flame retardant, an antimicrobial, a florescent whitening agent, and a colorant.

The lower limit of the total thickness of the heat shrinkable multilayer film of the present invention is preferably 10 μm, and the upper limit thereof is preferably 100 μm. The lower limit thereof is more preferably 15 μm, and the upper limit thereof is more preferably 80 μm. The lower limit thereof is still more preferably 20 μm, and the upper limit thereof is still more preferably 70 μm. If the total thickness of the heat shrinkable multilayer film is within the above range, the heat shrinkable multilayer film can be excellent in heat shrinkability, converting properties (e.g., printing properties, center sealing properties), and attachability.

In the heat shrinkable multilayer film of the present invention, the lower limit of the thickness of each of the front and back layers is preferably 5% of the total thickness of the heat shrinkable multilayer film, and the upper limit thereof is preferably 25%. The lower limit of the thickness of the interlayer is preferably 50% of the total thickness of the heat shrinkable multilayer film, and the upper limit thereof is preferably 90%. If the thickness of each of the front and back layers and that of the interlayer are within the above ranges, the heat shrinkable multilayer film can have high interlaminar strength and high transparency.

In the heat shrinkable multilayer film of the present invention, the lower limit of the thickness of each of the adhesive layers is preferably 0.3 μm, and the upper limit thereof is preferably 3.0 μm. If the thickness of the adhesive layer is less than 0.3 μm, the adhesive layer may not have sufficient adhesiveness. If the thickness of the adhesive layer is more than 3.0 μm, the heat shrinkable multilayer film may have low heat shrinkage properties and low optical properties. The lower limit of the thickness of each of the adhesive layer is more preferably 0.5 μm, and the upper limit thereof is more preferably 2.0 μm.

The total thickness of the heat shrinkable multilayer film can be adjusted by subtracting the thickness of the adhesive layers from the total thickness and then adjusting the thickness of the front and back layers and the interlayer.

In the case that the heat shrinkable multilayer film of the present invention has a five-layer structure of front layer (A)/adhesive layer (E)/interlayer (B)/adhesive layer (E)/back layer (C) with a total thickness of 40 μm, the thickness of each of the front layer (A) and the back layer (C) is preferably 2.0 to 10.0 μm, more preferably 3.0 to 8.0 μm. The thickness of each of the adhesive layers (E) is preferably 0.3 to 3.0 μm, more preferably 0.5 to 2.0 μm. The thickness of the interlayer (B) is preferably 19.0 to 35.4 μm, more preferably 20.0 to 33.0 μm.

In the heat shrinkable multilayer film of the present invention, the heat shrinkage in the main shrinkage direction (TD) when the film is immersed in warm water at 70°C for 10 seconds (hereinafter, also referred to as "TD heat shrinkage (70°C × 10 sec)") is preferably 5 to 40%.

If the TD heat shrinkage (70°C × 10 sec) is less than 5%, the shrink finish quality tends to be poor. If the TD heat shrinkage (70°C × 10 sec) is more than 40%, spontaneous shrinkage tends to be great.

The heat shrinkage can be determined by measuring the length of the film after heat shrinking at a given temperature for a given time and then calculating the heat shrinkage from the ratio of the thus measured length to the length before the heat shrinking.

In the heat shrinkable multilayer film of the present invention, the heat shrinkage in the main shrinkage direction (TD) when the film is immersed in warm water at 80°C for 10 seconds (hereinafter, also referred to as "TD heat shrinkage (80°C × 10 sec)") is preferably 30 to 60%.

If the TD heat shrinkage (80°C × 10 sec) is less than 30%, creases are more likely to occur in shrink finish. If the TD heat shrinkage (80°C × 10 sec) is more than 60%, appearance defects such as sliding-up of the label tend to occur in shrink finish.

In the heat shrinkable multilayer film of the present invention, the heat shrinkage in the main shrinkage direction (TD) when the film is immersed in boiling water for 10 seconds (hereinafter, also referred to as "TD heat shrinkage (boiling water × 10 sec)") is preferably 60 to 75%.

If the TD heat shrinkage (boiling water × 10 sec) is less than 60%, creases are more likely to occur in shrink finish. If the TD heat shrinkage (boiling water × 10 sec) is more than 75%, appearance defects such as sliding-up of the label tend to occur in shrink finish.

The boiling water as used herein refers to water obtained by heating and boiling water at an external pressure of 1 atm.

The heat shrinkable multilayer film of the present invention may be produced by any method, and preferably produced by simultaneously forming all the layers by a coextruding method. In the case of co-extrusion using a T-die, the layers may be stacked by a feed block technique, a multi-manifold technique, or a combination thereof.

An inflation technique using a multilayer annular die also can be used.

Specifically, for example, in the case of co-extrusion using a T-die, the heat shrinkable multilayer film of the present invention can be produced by putting materials for the front and back layers, the interlayer, and the adhesive layers in an extruder; extruding the materials into a sheet through a multilayer die; cooling and solidifying the sheet with take-up rolls; and uniaxially or biaxially stretching the sheet.

The stretching can be performed by, for example, a roll stretching method, a tenter stretching method, or a combination thereof. The stretching temperature depends on factors such as the softening temperature of the resins constituting the film and required shrinkage properties of the heat shrinkable multilayer film. The lower limit of the stretching temperature is preferably 65°C, and the upper limit thereof is preferably 120°C. The lower limit is more preferably 70°C, and the upper limit is more preferably 115°C. The stretch ratio in the main shrinkage direction depends on factors such as the resins constituting the film, the method of stretching the film, and the stretching temperature. The ratio is preferably three times or more, more preferably four times or more, whereas preferably seven times or less, more preferably 6.5 times or less. A stretching temperature and a stretch ratio within such ranges lead to excellent thickness accuracy, and prevent the front and back layers on the inner side of the film from remaining on a container due to delamination when the film is torn along perforations.

The usage of the heat shrinkable multilayer film of the present invention is not limited. Since the heat shrinkable multilayer film of the present invention has high interlaminar strength, suppresses delamination when scratched at an overlapped portion or torn along perforations after attachment to a container, and has excellent transparency, the heat shrinkable multilayer film is suitably used as, for example, a base film for heat shrinkable labels to be attached to containers such as plastic bottles and metal cans. A heat shrinkable label including the heat shrinkable multilayer film of the present invention is also encompassed by the present invention.

- Advantageous Effects of Invention

The present invention can provide a heat shrinkable multilayer film which is less likely to cause gel or like impurities during shape forming, and thus causes less printing defects during printing, such as missing ink derived from fish-eye-shaped protrusions and depressions due to the gel or like impurities. The present invention can also provide a heat shrinkable multilayer film which is less likely to spontaneously shrink and is heat-shrinkable at appropriate temperatures. The present invention can also provide a heat shrinkable multilayer film which is less likely to cause creases, sliding-up, or waviness after attachment. The present invention also can provide a heat shrinkable label including the heat shrinkable multilayer film.

DESCRIPTION OF EMBODIMENTS

Embodiments of the present inventions are described below in detail with reference to examples. The present invention is not limited to the examples.

Materials used in the examples and comparative examples are listed below.

(Polyester resin)

PET-1: polyester resin (glass transition temperature: 74°C) containing dicarboxylic acid components (79 mol% of a component derived from terephthalic acid and 21 mol% of a component derived from isophthalic acid) and diol components (86 mol% of a component derived from ethylene glycol, 2 mol% of a component derived from diethylene glycol, and 12 mol% of a component derived from neopentyl glycol)

PET-2: polyester resin (glass transition temperature: 68°C) containing dicarboxylic acid components (96 mol% of a component derived from terephthalic acid and 4 mol% of a component derived from isophthalic acid) and a diol component (100 mol% of a component derived from ethylene glycol)

(Polystyrene resin)

PS-1: styrene homopolymer (Vicat softening temperature: 94°C, MFR = 7.5 g/10 min)

PS-2: styrene-butadiene copolymer (70% by weight of styrene and 30% by weight of butadiene, Vicat softening temperature: 88°C, MFR = 10 g/min)

PS-3: styrene-butadiene copolymer (70% by weight of styrene and 30% by weight of butadiene, Vicat softening temperature: 72°C, MFR = 6 g/10 min)

(Polyester elastomer)

TPE-1: polyether-ester type polyester elastomer (Hytrel 2401, produced by Du Pont-Toray Co., Ltd.) having a polyester segment (hard segment) prepared from an aromatic dicarboxylic acid and a short chain glycol and a polyether segment (soft segment) prepared from an aromatic dicarboxylic acid and a polyalkylene glycol (long chain glycol)

The Vicat softening temperature was measured in accordance with JIS K 7206 (1999). Specifically, a specimen was taken from each of the above polyester resins and the polystyrene resins. Then, a needle-shaped indenter was placed on the specimen, and the temperature was raised at 120°C/h while applying a load of 10 N to the indenter. The temperature at which the needle-shaped indenter entered the specimen by 1 mm was measured as the Vicat softening temperature.

(Example 1)

As resins for the front and back layers, 70% by weight of the polyester resin (PET-1) and 30% by weight of the polyester resin (PET-3) were used.
As resins for the interlayer, 34% by weight of the polystyrene resin (PS-1) and 60% by weight of the polystyrene resin (PS-2) were used, and 6% by weight of diisononyl adipate (DINA) was added to the resins for the interlayer.
As resins for the adhesive layers, 60% by weight of the polyester elastomer (TPE-1) and 40% by weight of the polystyrene resin (PS-3) were used.
The resins were put in an extruder with a barrel temperature of 160°C to 250°C, and extruded through a multilayer die at 250°C into a five-layer sheet. The sheet was cooled and solidified with take-up rolls at 30°C. Subsequently, the sheet was stretched at a stretch ratio of six times in a tenter stretching machine with a preheating zone (105°C), a stretching zone (90°C), and a heat setting zone (85°C). The stretched sheet was wound on a winder. Thus, a heat shrinkable multilayer film was obtained in which the direction orthogonal to the main shrinkage direction was MD, and the main shrinkage direction was TD.
The heat shrinkable multilayer film had a five-layer structure of front or back layer (5 $\mu$m)/adhesive layer (1 $\mu$m)/interlayer (28 $\mu$m)/adhesive layer (1 $\mu$m)/front or back layer (5 $\mu$m), with a total thickness of 40 $\mu$m.

(Example 2)

As resins for the interlayer, 40% by weight of the polystyrene resin (PS-1) and 49% by weight of the polystyrene resin (PS-2) were used, and 11% by weight of diisononyl adipate (DINA) was added to the resins for the interlayer.
Other processes were performed in the same manner as in Example 1, whereby a five-layer structure film was obtained.

(Example 3)

As resins for the interlayer, 40% by weight of the polystyrene resin (PS-1) and 49% by weight of the polystyrene resin (PS-2) were used, and 11% by weight of diisononyl phthalate (DINP) was added to the resins for the interlayer.
Other processes were performed in the same manner as in Example 1, whereby a five-layer structure film was obtained.

(Example 4)

As resins for the interlayer, 35% by weight of the polystyrene resin (PS-1) and 50% by weight of the polystyrene resin (PS-2) were used, and 15% by weight of epoxidized soybean oil (epoxidized fatty acid glyceride, Adekacizer 0-130P, produced by Adeka Corporation) was added to the resins for the interlayer.
Other processes were performed in the same manner as in Example 1, whereby a five-layer structure film was obtained.

(Example 5)

As resins for the interlayer, 50% by weight of the polystyrene resin (PS-1) and 35% by weight of the polystyrene resin (PS-2) were used, and 15% by weight of diisononyl adipate (DINA) was added to the resins for the interlayer.
Other processes were performed in the same manner as in Example 1, whereby a five-layer structure film was obtained.

(Example 6)

As resins for the interlayer, 50% by weight of the polystyrene resin (PS-1) and 30% by weight of the polystyrene resin (PS-2) were used, and 20% by weight diisononyl phthalate (DINP) was added to the resins for the interlayer.

Other processes were performed in the same manner as in Example 1, whereby a five-layer structure film was obtained.

(Example 7)

As resins for the interlayer, 50% by weight of the polystyrene resin (PS-1) and 25% by weight of the polystyrene resin (PS-2) were used, and 25% by weight diisononyl adipate (DINA) was added to the resins for the interlayer.

Other processes were performed in the same manner as in Example 1, whereby a five-layer structure film was obtained.

(Example 8)

As resins for the interlayer, 60% by weight of the polystyrene resin (PS-1) and 25% by weight of the polystyrene resin (PS-2) were used, and 15% by weight of diisononyl adipate (DINA) was added to the resins for the interlayer.

Other processes were performed in the same manner as in Example 1, whereby a five-layer structure film was obtained.

(Example 9)

As resins for the interlayer, 75% by weight of the polystyrene resin (PS-1) and 10% by weight of the polystyrene resin (PS-2) were used, and 15% by weight of diisononyl adipate (DINA) was added to the resins for the interlayer.

Other processes were performed in the same manner as in Example 1, whereby a five-layer structure film was obtained.

(Example 10)

As resins for the interlayer, 80% by weight of the polystyrene resin (PS-1) and 9% by weight of the polystyrene resin (PS-2) were used, and 11% by weight of diisononyl adipate (DINA) was added to the resins for the interlayer.

Other processes were performed in the same manner as in Example 1, whereby a five-layer structure film was obtained.

(Example 11)

As resins for the interlayer, 89% by weight of the polystyrene resin (PS-1) and 11% by weight of diisononyl adipate (DINA) were used.

Other processes were performed in the same manner as in Example 1, whereby a five-layer structure film was obtained.

(Comparative Example 1)

As a resin for the interlayer, 100% by weight of the polystyrene resin (PS-2) was used.

Other processes were performed in the same manner as in Example 1, whereby a five-layer structure film was obtained.

(Comparative Example 2)

As resins for the interlayer, 50% by weight of the polystyrene resin (PS-1) and 46% by weight of the polystyrene resin (PS-2) were used, and 4% by weight of diisononyl adipate (DINA) was added to the resins for the interlayer.

Other processes were performed in the same manner as in Example 1, whereby a five-layer structure film was obtained.

(Comparative Example 3)

As resins for the interlayer, 50% by weight of the polystyrene resin (PS-1) and 10% by weight of the polystyrene resin (PS-2) were used, and 40% by weight of diisononyl adipate (DINA) was added to the resins for the interlayer.

Other processes were performed in the same manner as in Example 1, whereby a five-layer structure film was obtained.

(Evaluation)

The heat shrinkable multilayer films obtained in the examples and comparative examples were evaluated for the following parameters. Table 1 shows the structure of the heat shrinkable multilayer films and the evaluation results.

(1) Heat shrinkage

The heat shrinkable multilayer film was cut into a size of 100 mm in the main shrinkage direction (TD) × 100 mm in the direction orthogonal to the main shrinkage direction (MD), whereby a sample was prepared. The sample was immersed in warm water at 70°C for 10 seconds. Then the sample was taken out and immediately immersed in tap water for 10 seconds. The length (L) of one side along the TD of the sample was measured, and the heat shrinkage in TD was calculated by Formula (1) below.

$$\text{Heat shrinkage } (\%) = \{(100 - L)/100\} \times 100 \quad (1)$$

This measurement was performed for three samples (n=3), and the average value thereof was taken as the shrinkage. The heat shrinkage in the case of immersion in warm water at 80°C for 10 seconds and that in the case of immersion in warm water at 100°C for 10 seconds were also measured in the same manner.

(2) Spontaneous shrinkage

The heat shrinkable multilayer film was cut into a size of 100 mm in the main shrinkage direction (TD) × 100 mm in the direction orthogonal to the main shrinkage direction (MD), whereby a sample was prepared. The sample was allowed to stand in a low temperature incubator (IL-82, produced by Yamato Scientific Co., Ltd.) set at 40°C for seven days. The spontaneous shrinkage was measured in the same manner as the heat shrinkage. Only the spontaneous shrinkage in TD was measured. Evaluation criteria were as follows.

○ (Good): 2.0% or less
× (Poor): 2.1% or more

(3) Printability

Printing was performed on the obtained heat shrinkable multilayer film using a five-color gravure printing machine.

Film width: 900 mm
Printing inks: OSM-type sepia, red, yellow, blue, and white (base portion), produced by Dainichiseika Color & Chemicals Mfg. Co., Ltd.
Ink viscosity: 15 sec (Zahn cup method, Zahn cup #3)
Plate: color chart plates prepared by engraving platemaking Printing speed: 150 m/min.

The number of missing ink spots per 1 $m^2$ of the heat shrinkable multilayer film was measured using a defect detector (produced by Futec Inc.). Evaluation criteria were as follows.

○ (Good): 5 or less
Δ (Fair): 6 to 10
× (Poor): 11 or more

(4) Shrink finish quality

Two ends of the obtained heat shrinkable multilayer film were bonded to each other with a solvent such that the main shrinkage direction corresponded to the circumferential direction, whereby a tubular heat shrinkable label (flat width: 114 mm, length: 160 mm) was prepared. The obtained tubular heat shrinkable label was slipped over a round (polygonal) 500-ml PET bottle having a diameter of about 65 mm, and shrunk using a steam tunnel ("SH-5000" produced by Fuji Astec, Inc). The steam pressures in the zones were 0.06 MPa, 0.08 MPa, and 0.1 MPa, the set temperatures were 80°C, 85°C, and 95°C, and the tunnel transit time was seven seconds. The attachment evaluation was performed in accordance with the following criteria.

○ (Good): No crease, sliding-up, or distortion was observed.
× (Poor): At least one of crease, sliding-up, and distortion was observed.

EP 3 115 201 A1

[Table 1]

| | | | | Example 1 | Example 2 | Example 3 | Example 4 | Example 5 | Example 3 | Example 7 | Example 8 | Example 9 | Example 10 | Example 11 | Comparative Example 1 | Comparative Example 2 | Comparative Example 3 |
|---|---|---|---|---|---|---|---|---|---|---|---|---|---|---|---|---|---|
| Resin (% by weight) | Front and back layers | Polyester resin | PET-1 | 70 | 70 | 70 | 70 | 70 | 70 | 70 | 70 | 70 | 70 | 70 | 70 | 70 | 70 |
| | | | PET-2 | 30 | 30 | 30 | 30 | 30 | 30 | 30 | 30 | 30 | 30 | 30 | 30 | 30 | 30 |
| | Interlayer | Polystyrene resin | PS-1 | 34 | 40 | 40 | 35 | 50 | 50 | 50 | 60 | 75 | 80 | 89 | - | 50 | 50 |
| | | | PS-2 | 60 | 49 | 49 | 50 | 35 | 30 | 25 | 25 | 10 | 9 | - | 100 | 46 | 10 |
| | | Proportion (% by weight) of styrene | | 76 | 74.3 | 74.3 | 70 | 74.5 | 71 | 67.5 | 77.5 | 80.5 | 86.3 | 89 | 70 | 82.2 | 57 |
| | | Proportion (% by weight) of butadiene | | 18 | 14.7 | 14.7 | 15 | 10.5 | 9 | 7.5 | 7.5 | 4.5 | 2.7 | 0 | 30 | 13.8 | 3 |
| | | Plasticizer | DINA | 6 | 11 | - | - | 15 | - | 25 | 15 | 15 | 11 | 11 | - | 4 | 40 |
| | | | DINP | - | - | 11 | - | - | 20 | - | - | - | - | - | - | - | - |
| | | | Epoxidized soybean oil | - | - | - | 15 | - | - | - | - | - | - | - | - | - | - |
| | Adhesive layer | Polyester elastomer | TPE-1 | 60 | 60 | 60 | 60 | 60 | 60 | 60 | 60 | 60 | 60 | 60 | 60 | 60 | 60 |
| | | Polystyrene resin | PS-3 | 40 | 40 | 40 | 40 | 40 | 40 | 40 | 40 | 40 | 40 | 40 | 40 | 40 | 40 |
| Evaluation | Heat shrinkage (%) | 70°C×10 sec | TD | 9 | 21 | 17 | 18 | 33 | 24 | 30 | 31 | 29 | 26 | 25 | 12 | 9 | 49 |
| | | 80°C×10 sec | TD | 35 | 47 | 44 | 42 | 57 | 53 | 55 | 55 | 53 | 51 | 50 | 36 | 28 | 72 |
| | | 100°C×10 sec | TD | 62 | 62 | 62 | 60 | 66 | 62 | 63 | 64 | 62 | 61 | 60 | 60 | 54 | 82 |
| | Spontaneous shrinkage (%) | 40°C×7 days | TD | 0.5 | 0.7 | 0.6 | 0.6 | 0.8 | 0.7 | 0.8 | 0.8 | 0.8 | 0.7 | 0.7 | 0.9 | 0.5 | 2.5 |
| | | Evaluation | | ○ | ○ | ○ | ○ | ○ | ○ | ○ | ○ | ○ | ○ | ○ | ○ | ○ | × |

15

(continued)

| | | Example 1 | Example 2 | Example 3 | Example 4 | Example 5 | Example 6 | Example 7 | Example 8 | Example 9 | Example 10 | Example 11 | Comparative Example 1 | Comparative Example 2 | Comparative Example 3 |
|---|---|---|---|---|---|---|---|---|---|---|---|---|---|---|---|
| Printability | (Number of ink spots/m²) | 7 | 5 | 5 | 4 | 2 | 1 | 1 | 1 | 1 | 0 | 0 | 16 | 4 | 0 |
| | Evaluation | △ | ○ | ○ | ○ | ○ | ○ | ○ | ○ | ○ | ○ | ○ | × | ○ | ○ |
| Shrink finish quality | | ○ | ○ | ○ | ○ | ○ | ○ | ○ | ○ | ○ | ○ | ○ | ○ | × | ○ |

INDUSTRIAL APPLICABILITY

The present invention provides a heat shrinkable multilayer film which has excellent printability and also has good finish quality after attachment. The present invention also provides a heat shrinkable label including the heat shrinkable multilayer film.

**Claims**

1.  A heat shrinkable multilayer film, comprising:

    front and back layers each containing a polyester resin;
    an interlayer; and
    adhesive layers,

    the front and back layers and the interlayer being stacked with the adhesive layers interposed therebetween,
    the interlayer containing a styrene homopolymer and a plasticizer,
    the interlayer containing the plasticizer in an amount of 5 to 35% by weight.

2.  The heat shrinkable multilayer film according to claim 1,
    wherein the interlayer contains the styrene homopolymer in an amount of 10 to 90% by weight.

3.  The heat shrinkable multilayer film according to claim 1 or 2,
    wherein the interlayer contains an aromatic vinyl hydrocarbon-conjugated diene copolymer.

4.  The heat shrinkable multilayer film according to claim 3,
    wherein the interlayer contains the aromatic vinyl hydrocarbon-conjugated diene copolymer in an amount of 60% by weight or less.

5.  The heat shrinkable multilayer film according to claim 1, 2, 3, or 4,
    wherein the plasticizer is an ester compound or an epoxidized vegetable oil.

6.  The heat shrinkable multilayer film according to claim 1, 2, 3, 4, or 5,
    wherein the adhesive layers each contain at least one selected from the group consisting of a polyester elastomer, a styrene elastomer, and an aromatic vinyl hydrocarbon-conjugated diene copolymer.

7.  A heat shrinkable label, comprising the heat shrinkable multilayer film according to claim 1, 2, 3, 4, 5, or 6.

## INTERNATIONAL SEARCH REPORT

| International application No. |
| --- |
| PCT/JP2015/055032 |

| A. CLASSIFICATION OF SUBJECT MATTER |
| --- |
| *B32B27/22*(2006.01)i, *B29C61/06*(2006.01)i, *B32B7/02*(2006.01)i, *B32B27/30* (2006.01)i, *B32B27/36*(2006.01)i, *G09F3/04*(2006.01)i, *B29K67/00*(2006.01)n, *B29K105/02*(2006.01)n, *B29L9/00*(2006.01)n |
| According to International Patent Classification (IPC) or to both national classification and IPC |

| B. FIELDS SEARCHED |
| --- |
| Minimum documentation searched (classification system followed by classification symbols) |
| B32B1/00-43/00, B29C55/00-55/30, B29C61/00-61/10, G09F1/00-5/04, B29K67/00, B29K105/02, B29L9/00 |

Documentation searched other than minimum documentation to the extent that such documents are included in the fields searched

| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)
Thomson Innovation

| C. DOCUMENTS CONSIDERED TO BE RELEVANT |
| --- |

| Category* | Citation of document, with indication, where appropriate, of the relevant passages | Relevant to claim No. |
| --- | --- | --- |
| Y | JP 2007-070545 A (Mitsubishi Plastics, Inc.), 22 March 2007 (22.03.2007), claims 1, 3, 6; paragraphs [0001], [0016], [0020], [0031], [0043] to [0045], [0061] (Family: none) | 1-7 |
| Y | WO 2008/129598 A1 (Toyobo Co., Ltd.), 30 October 2008 (30.10.2008), claims; paragraphs [0030], [0046]; examples (Family: none) | 1-7 |
| Y | JP 2011-079237 A (Asahi Kasei Chemicals Corp.), 21 April 2011 (21.04.2011), claim 1; paragraphs [0001], [0101], [0106], [0113]; examples (Family: none) | 1-7 |

| ☐ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 08 May 2015 (08.05.15) | 19 May 2015 (19.05.15) |

| Name and mailing address of the ISA/ Japan Patent Office 3-4-3,Kasumigaseki,Chiyoda-ku, Tokyo 100-8915,Japan | Authorized officer |
| --- | --- |
| | Telephone No. |

Form PCT/ISA/210 (second sheet) (July 2009)

**EP 3 115 201 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006015745 A